**Europäisches Patentamt**

**European Patent Office**

**Office européen des brevets**

(19)

(11) Numéro de publication : **0 161 169 B2**

(12) # NOUVEAU FASCICULE DE BREVET EUROPEEN

(45) Date de publication du nouveau fascicule du brevet : **11.11.92 Bulletin 92/46**

(51) Int. Cl.$^5$ : **A01G 23/06**

(21) Numéro de dépôt : **85400716.8**

(22) Date de dépôt : **10.04.85**

(54) **Outil d'essouchement.**

(30) Priorité : **13.04.84 FR 8405900**

(43) Date de publication de la demande :
**13.11.85 Bulletin 85/46**

(45) Mention de la délivrance du brevet :
**28.10.87 Bulletin 87/44**

(45) Mention de la décision concernant
l'opposition :
**11.11.92 Bulletin 92/46**

(84) Etats contractants désignés :
**AT BE CH DE FR GB IT LI LU NL SE**

(56) Documents cités :
**FR-A- 2 386 251**
**US-A- 2 966 180**
**US-A- 4 094 348**
**Prospectus Becker "Dessouchage- la fin des
soucis"**

(73) Titulaire : **Becker, André**
**54 rue Saint Vincent Bulligny**
**F-54170 Colombey les Belles (FR)**

(72) Inventeur : **Becker, André**
**54 rue Saint Vincent Bulligny**
**F-54170 Colombey les Belles (FR)**

(74) Mandataire : **Poupon, Michel et al**
**B.P. 421 3, rue Ferdinand Brunot**
**F-88011 Epinal Cédex (FR)**

EP 0 161 169 B2

# Description

La présente invention concerne un outil d'essouchement.

Il est connu que lors de l'abattage des arbres il est nécessaire de détruire les souches afin de permettre les travaux de terrassement ou de mise en culture du sol.

Le procédé le plus élémentaire pour effectuer un essouchement est de creuser le sol tout autour de la souche, puis d'extraire celle-ci. Ce procédé présente toutefois de nombreux inconvénients, en particulier le temps nécessaire pour effectuer une telle opération est très important et le volume de terre déplacé est considérable. De plus, la souche est alors extraite d'un seul morceau et sa destruction, par exemple par incinération, est très difficile.

Afin d'éviter ces inconvénients, on a déjà proposé divers outils d'essouchement. En particulier, on a proposé des outils comprenant une lame pivotante montée à l'extrémité d'un bras, en face d'une contre-lame selon une structure semblable à celle d'un sécateur de très grandes dimensions. De tels outils permettent seulement de fendre verticalement une souche, mais ne permettent pas d'extraire aisément des parties de souche de sorte qu'ils n'ont connu aucun développement pratique.

Par ailleurs, le document US-A-4 094 348 décrit un outil d'essouchement comprenant un éperon allongé, plat, présentant un bord tranchant à une extrémité et une lame de coupe dans un plan transversal au plan de l'éperon. La lame de coupe comporte une série de dents dirigées obliquement par rapport au plan de l'éperon. De tels outils permettent de fendre la souche sur une certaine hauteur et de découper une partie de la souche à la façon d'un soc de charrue.

Cependant, en raison de l'orientation oblique des dents, ces outils subissent une réaction latérale importante qui est supportée par l'éperon et leur structure doit être renforcée afin de supporter les efforts engendrés, ce qui les rend très lourds. En conséquence, il est nécessaire de les atteler à l'avant d'engins lourds qui peuvent difficilement évoluer sur des terrains en pente ou de nature marécageuse.

Pour palier ces inconvénients, on propose selon l'invention un outil d'essouchement comprenant, disposé à l'extrémité d'un moyen de manoeuvre, un éperon allongé, plat, présentant un bord tranchant à une extrémité et une lame de coupe dans un plan transversal au plan de l'éperon, la lame de coupe comportant une série de dents en escalier, chaque dent présentant un bord tranchant sur un côté adjacent au bord tranchant de l'éperon, dans lequel le bord tranchant des dents de la série de dents en escalier est parallèle à un plan sensiblement perpendiculaire au plan de l'éperon, caractérisé en ce que chaque bord tranchant des dents de la série de dents en escalier est sensiblement perpendiculaire au plan de l'éperon.

On a constaté que les dents successives du bord tranchant de la lame de coupe provoquent un éclatement instantané des portions de souche découpées, de sorte qu'un travail très efficace est obtenue avec un effort minimal.

Selon un autre aspect de l'invention, la lame de coupe a un talon comportant un bord tranchant de talon sur un côté de la lame de coupe opposé au bord tranchant de l'éperon.

Ainsi, il est possible d'éviter un soulèvement des racines du côté opposé au côté sur lequel la souche est attaquée, grâce à un sectionnement préalable de ces racines au moyen du bord tranchant de talon.

Selon une caractéristique avantageuse de cet aspect de l'invention, le bord tranchant de talon comporte une série de dents en escalier ayant un bord tranchant parallèle à un plan perpendiculaire au plan de l'éperon. Ainsi, on obtient pour le bord tranchant de talon les mêmes avantages que pour le bord tranchant adjacent au bord tranchant de l'éperon.

Selon une version préférée de cet aspect de l'invention, les dents du bord tranchant de talon sont biseautées sur une face, le biseau étant tourné vers le bas. Ainsi, on obtient un meilleur contrôle de l'effet plongeant de l'outil.

Selon encore un autre aspect de l'invention, la lame de coupe comporte un talon présentant un angle saillant tranchant. Ainsi, l'outil d'essouchement peut être utilisé lors de l'abattage d'un arbre pour guider celui-ci dans sa chute.

Selon une version avantageuse de l'invention dans ses différents aspects, l'outil d'essouchement comporte des moyens de raccordement à un bras articulé. Ainsi, l'outil peut être utilisé dans des terrains en pente, ou des terrains marécageux, l'engin restant sur le sol plan et ferme tandis que l'outil est déplacé à distance.

D'autres caractéristiques et avantages de l'invention résulteront encore de la description ci-après d'un exemple non limitatif en référence aux dessins annexés dans lesquels:

la figure 1 est une vue en perspective de l'outil d'essouchement selon l'invention;

la figure 2 est une vue de côté de l'outil d'essouchement;

la figure 3 est une vue de dessus selon le plan de coupe III-III de la figure 2;

la figure 4 est une vue de face de la partie basse de l'outil d'essouchement;

la figure 5 est une vue de côté d'une variante de réalisation de l'invention;

la figure 6 est une vue en perspective d'un outil d'essouchement à main conforme à l'invention.

En référence aux figures, l'outil d'essouchement comprend un éperon 1 allongé, plat, présentant un bord tranchant 2, réalisé par une partie biseautée 3 formant un angle taillant, à laquelle est accolée une partie biseautée 4 formant un angle de dépouille.

L'outil d'essouchement comporte également une lame de coupe 5, fixée à l'éperon 1, par exemple au moyen d'une soudure, dans un plan transversal au plan de l'éperon 1.

Das le mode de réalisation illustré, le.bord inférieur 13 de l'éperon 1 est soudé sur la face supérieure de la lame de coupe 5 qui s'étend sous l'éperon. L'éperon comprend, à l'avant, un épaulement 26 pour que son bord inférieur coïncide avec la face inférieure de la lame de coupe.

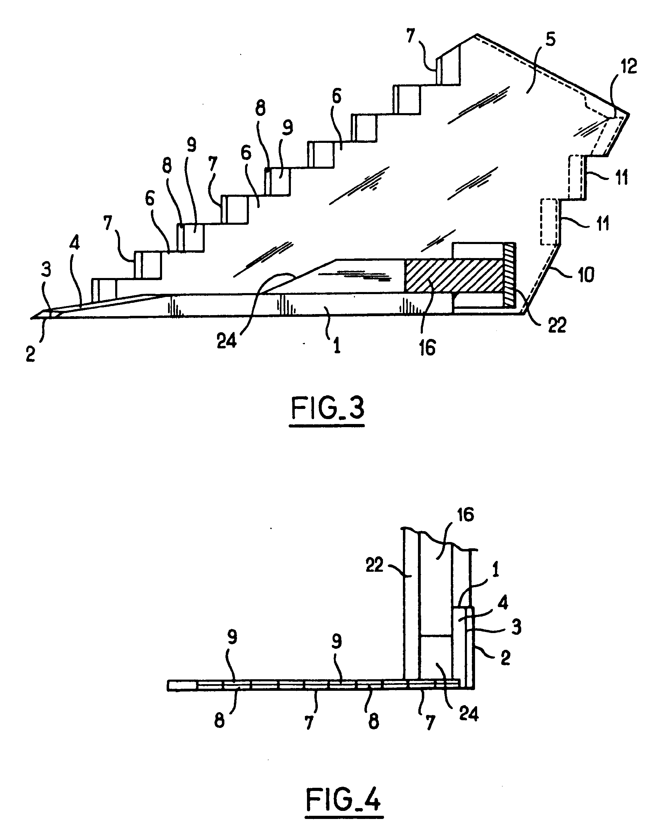

Selon l'invention, la lame de coupe 5 comporte une série de dents 6 en escalier ayant chacune un bord tranchant 7 parallèle à un plan P sensiblement perpendiculaire au plan de l'éperon 1. Ainsi, que cela est illustré par les figures 3 et 4, le bord tranchant 7 de chacune des dents 6 est de préférence réalisé au moyen d'une partie biseautée 8 dirigée vers le haut selon un angle taillant à laquelle est accolée une partie biseautée 9, également dirigée vers le haut selon un angle de dépouille.

Sur un côté de la lame de coupe 5 opposée au bord tranchant 2 de l'éperon 1, la lame de coupe 5 comporte un bord tranchant de talon 10, s'étendant obliquement par rapport au plan de l'éperon 1. Sur la version avantageuse représentée, le bord tranchant de talon 10 comporte une série de dents 11 en escalier, ayant un bord tranchant parallèle au plan P perpendiculaire au plan de l'éperon 1.

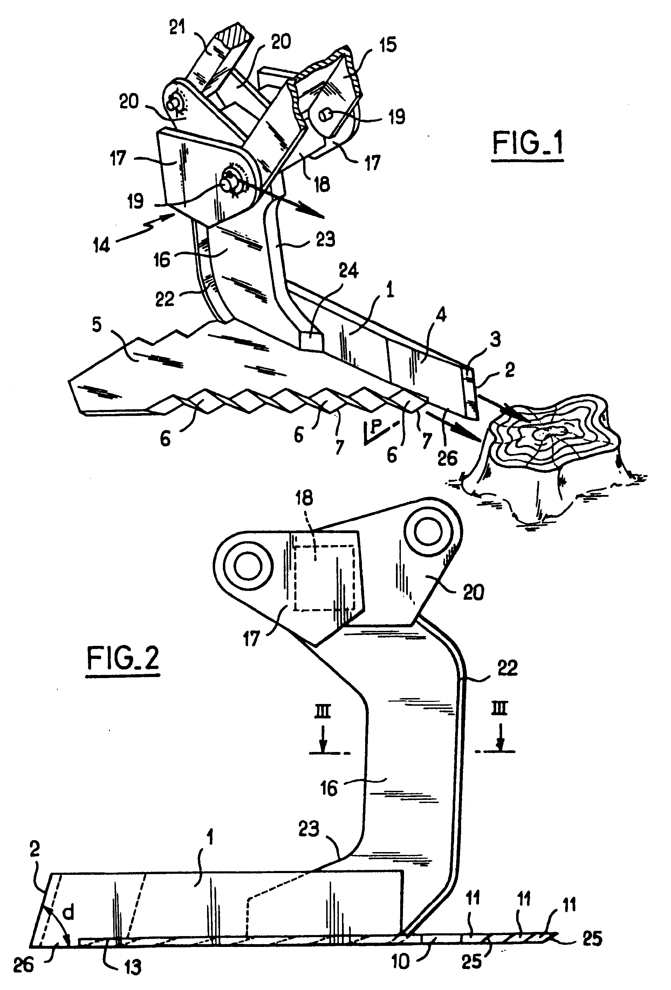

Ainsi qu'on peut le voir sur la figure 2, les dents 11 du bord tranchant de talon 10 ont un biseau 25 sur une face, ce biseau 25 étant tourné vers le bas.

Selon le mode de réalisation représenté, la lame de coupe 5 comporte un talon présentant un angle saillant 12 tranchant.

Selon un autre aspect de l'invention, le bord tranchant 2 de l'éperon 1 est incliné par rapport au bord inférieur 13 de l'éperon 1 d'un angle d inférieur à 90°.

Selon la version préférée, l'outil de d'essouchement comporte des moyens de raccordement 14 à un bras articulé 15, par exemple le bras articulé d'une pelleteuse mécanique à transmission de force hydraulique.

Les moyens de raccordement 14 comprennent une plaque support 16, disposée à l'arrière de l'éperon et de la lame de coupe et accolée à l'éperon contre lequel elle est maintenue, par exemple par une soudure.

Le raccordement de la plaque support 16 avec le bras articulé 15 se fait, par exemple, au moyen de goussets 17, soudés sur les côtés d'une traverse 18 et articulès avec le bras 15 au moyen de pivots 19.

Selon la réalisation représentée, les moyens de raccordement comportent également des goussets 20 fixés sur la traverse 18 et articulés sur un organe d'orientation 21 dont la coopération avec le bras articulé 15 est réalisée selon des moyens conventionnels des pelleteuses mécaniques connus en eux-mêmes et dont il est donc inutile de donner une description détaillée.

Pour éviter un vrillage de la plaque support 16, on prévoit de préférence de fixer le long du bord arrière de celle-ci une plaque de renfort 22, s'étendant perpendiculairement à la plaque support, 16.

La plaque support 16 comporte un bord avant 23 incurvé vers le bord tranchant 2 de l'éperon 1, et se termine par un biseau 24 tourné dans le même sens que le biseau 3, 4 du bord tranchant de l'éperon 1.

Lors de l'utilisation, l'outil est de préférence monté sur le bras articulé d'une pelle mécanique à transmission de force hydraulique, et amené, en arrière de la souche à éliminer, ainsi que cela est illustré sur la figure 1.

Le bord tranchant 2 de l'éperon 1 est amené contre la souche puis tiré dans une direction parallèle au plan de l'éperon 1, comme cela est figuré par les flèches sur la figure 1. En pénétrant dans la souche, l'éperon fend celle-ci tandis que les dents découpent progressivement des tranches horizontales qui éclatent au fur et à mesure, de sorte que le frottement sur la deuxième dent résultant de la partie de souche attaquée par la première dent est pratiquement négligeable et il en est de même pour les dents suivantes par rapport aux précédentes. On remarque donc que les dents en escalier dont le bord tranchant est disposé sensiblement perpendiculairement au plan de l'éperon apportent le double avantage d'une très forte diminution de l'effort latéral sur la lame de coupe et de l'éclatement progressif de chaque tranche de souche découpée, ce qui minimise le frottement sur la lame de coupe et donc l'énergie nécessaire à l'élimination de la souche.

Dans les souches grosses et à bois dur, seules les deux premières dents travaillent, mais dans l'essouchement facile tel que les petits taillis ou épines, on peut utiliser à plein l'outil; par ailleurs la largeur de la plaque 5 permet le dégagement des terres et copeaux au cours du travail dans les grosses souches. on remarquera également que la disposition de la plaque support 16 à l'arrière de la lame de coupe 5 et son accolement à l'éperon 1 permettent d'obtenir une structure réalisant un frottement minimal avec la souche et un entraînement de l'outil selon une position particulièrement adaptée pour tirer le meilleur parti des forces appliquées sur l'outil par le bras articulé 15.

Dans le cas de grosses souches, il arrive que certaines parties, notamment des grosses racines, soient entraînées par l'outil au lieu d'éclater sous la pression de celui-ci. Par un effet de réaction, ces parties entraînées ont tendance à défoncer le sol en avant de la souche, c'est-à-dire du côté opposé à celui où la souche est attaquée par l'outil d'essouchement. Pour éviter ce phénomène de défoncement du sol, il est souhaitable de sectionner les racines en avant de la souche et on utilise pour cela le bord tranchant de talon 10 et les dents 11 prévues à l'arrière

de l'outil.

Lorsque l'on souhaite abattre un arbre et le faire tomber dans une direction différente de celle dans laquelle il aurait naturellement tendance à tomber, l'angle saillant, tranchant 12 est utilisé comme appui. Das ce cas, l'angle 12 est planté dans l'arbre avant l'abattage et au fur et à mesure que l'arbre est sectionné à sa base, l'arbre est repoussé en exerçant un effort sur l'outil dans la direction souhaitée.

Dans le mode de réalisation représente sur les figures 1 à 4, l'outil d'essouchement est manoeuvré en déplaçant le bras articulé 15 et en adaptant simultanément la position relative de l'outil au moyen de l'organe d'orientation 21. Dans le cas d'une pelle hydraulique, cela met donc en oeuvre non seulement les vérins de l'organe d'orientation 21 mais également les vérins de manoeuvre du bras articulé 15 qui correspondent à une puissance consommée élevée.

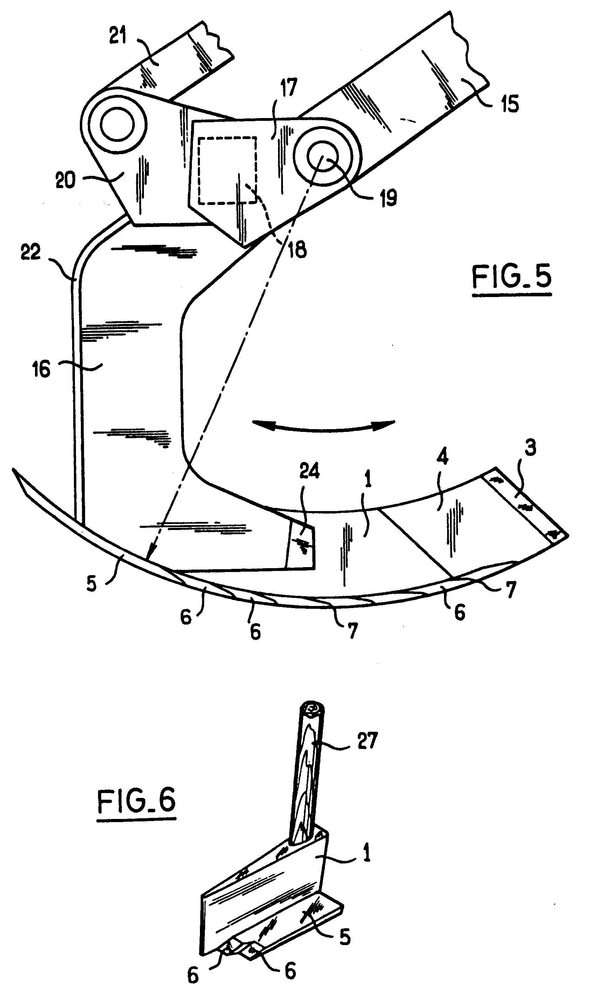

Pour des souches de petite dimension, on a donc jugé préférable d'utiliser un outil plus facile à manier qui est représenté sur la figure 5. La structure générale de cet outil est identique à celle de l'outil précédemment décrit et des références numériques identiques sont donc utilisées. Dans cette variante de réalisation, la lame de coupe 5 a la forme d'une portion de cylindre dont l'axe coïncide avec les moyens de pivotement 19 de l'outil sur le bras articulé 15, au moins le bord inférieur de l'éperon 1 étant également cintré pour ne pas venir en saillie sous la lame de coupe. Ainsi, l'outil peut être manoeuvré en laissant le bras articulé 15 pratiquement immobile et en faisant seulement pivoter l'outil au moyen de l'organe d'orientation 21. La puissance consommée par la pelle hydraulique est donc réduite.

On a illustré sur la figure 6 une variante d'exécution pour un outil d'essouchement à main convenant pour de très petites souches. Une fois encore, la structure générale est identique aux modes de réalisation précédents mais la plaque support 16 est cette fois remplacée par un manche 27 fixé à l'éperon 1 à la façon d'un manche de hâche. Aifin d'éviter une trop grande résistance de l'outil lors de la pénétration dans la souche, la lame de coupe 5 comprend de préférence deux dents seulement.

Bien entendu, l'invention n'est pas limitée aux modes de réalisation décrits ci-dessus, et on peut y apporter des variantes d'exécution.

Ainsi, l'outil d'essouchement selon l'invention peut être utilisé de façon conventionnelle à l'avant d'un engin tel qu'un tracteur. Bien entendu, dans ce cas, la lame de coupe 5 ne comporte pas de bord arrière tranchant.

De même, bien qu'un angle d inférieur à 90° favorise une pénértation aisée du bord tranchant 2 de l'éperon 1 dans la souche et serve également à compenser autant que possible l'usure plus rapide du bas du bord tranchant 2, on peut, d'une façon traditionnelle, prévoir un bord tranchant 2 perpendiculaire au bord inférieur 13 de l'éperon 1.

Au lieu de prévoir des dents 7 de dimensions régulières, on peut prévoir des dents 7 dont la largeur diminue au fur et à mesure que la distance augmente par rapport à l'éperon 1.

L'éperon 1 peut dépasser d'une longueur très faible par rapport à la première dent 7.

## Revendications

1. Outil d'essouchement comprenant, disposé à l'extrémité d'un moyen de manoeuvre, un éperon (1) allongé, plat, présentant un bord tranchant (2) à une extrémité et une lame de coupe (5) dans un plan transversal au plan de l'éperon (1), la lame de coupe (5) comportant une série de dents (6) en escalier, chaque dent (6) présentant un bord tranchant (7) sur un côté adjacent au bord tranchant (2) de l'éperon (1), dans lequel le bord tranchant (7) des dents (6) de la série de dents (6) en escalier est parallèle à un plan (P) sensiblement perpendiculaire au plan de l'éperon (1), caractérisé en ce que chaque bord tranchant (7) des dents (6) de la série de dents (6) en escalier est sensiblement perpendiculaire au plan de l'éperon (1).

2. Outil d'essouchement selon la revendication 1, caractérisé en ce que la lame de coupe a un talon comportant un bord tranchant (10) de talon sur un côté de la lame de coupe (5) opposé au bord tranchant (2) de l'éperon (1).

3. Outil d'essouchement selon la revendication 2, caractérisé en ce que le bord tranchant (10) de talon comporte une série de dents (11) en escalier ayant un bord tranchant parallèle au plan (P) sensiblement perpendiculaire au plan de l'éperon (1).

4. Outil d'essouchement selon la revendication 3, caractérisé en ce que les dents (1) du bord tranchant (10) de talon sont biseautées sur une face, le biseau (25) étant tourné vers le bas.

5. Outil d'essouchement selon l'une quelconque des revendications 1 à 4, caractérisé en ce que la lame de coupe (5) comporte un talon présentant un angle saillant (12) tranchant.

6. Outil d'essouchement selon l'une quelconque des revendications 1 à 5, caractérisé en ce que le bord tranchant (2) de l'éperon (1) est incliné par rapport au bord inférieur (13) de l'éperon (1) d'un angle (d) inférieur à 90°.

7. Outil d'essouchement selon l'une quelconque des revendications 1 à 6, caractérisé en ce qu'il comporte des moyens (14) de raccordement à un bras articulé (15).

8. Outil d'essouchement selon la revendication 7, caractérisé en ce que les moyens de raccordement (14) comprennent une plaque support (16) fixée à l'arrière de l'éperon (1) et de la lame de coupe (5).

9. Outil d'essouchement selon la revendication 8, caractérisé en ce que la plaque support ( 16) est accolée à l'éperon (1).

10. Outil d'essouchement selon la revendication 8 ou la revendication 9, caractérisé en ce que la plaque support (16) comporte une plaque de renfort (22) disposée le long du bord arrière de la plaque support (16) perpendiculairement à celle-ci.

11. Outil d'essouchement selon l'une quelconque des revendications 7 à 10, caractérisé en ce que la lame de coupe (5) a la forme d'un secteur de cylindre centrée sur des moyens de pivotement (19) de l'outil par rapport au bras articulé (15).

12. Outil d'essouchement selon la revendication 1, caractérisé en ce qu'il comporte un manche (27) fixé à l'éperon (1).

**Patentansprüche**

1. Wurzelreißwerkzeug mit einem am Ende einer Manövriereinrichtung angeordneten, gestreckten, flachen Sporn (1), der eine Schneidkante (2) an einen Ende und eine Schneidklinge (5) in einer quer zur Ebene des Sporns (1) verlaufenden Ebene aufweist, wobei die Schneidklinge (5) eine Reihe von gestuften Zähnen (5) aufweist, die alle mit einer Schneidkante (7) auf einer Seite versehen sind, welche an der Schneidkante (2) des Sporns (1) angrenzt, bei dem die Schneidkante (7) der Zähne (6) der Reihe von gestuften Zähnen (6) parallel zu einer Ebene (P) ist, welche im wesentlichen senkrecht auf der Ebene des Sporns (1) steht, **dadurch gekennzeichnet,** daß jede Schneidkante (7) der Zähne (6) der Reihe von gestuften Zähnen (6) im wesentlichen senkrecht zur Ebene des Sporns (1) verläuft.

2. Wurzelreisswerkzeug nach Anspruch 1, dadurch gekennzeichnet, dass die Schneidklinge einen Absatz umfasst, der eine Absatz-Schneidkante (10) auf einer Seite der Schneidklinge (5) aufweist, welche der Schneidkante (2) des Sporns (1) gegenüberliegt.

3. Wurzelreisswerkzeug nach Anspruch 2, dadurch gekennzeichnet, dass die Absatz-Schneidkante (10) eine Reihe von gestuften Zähnen (11) umfasst, die eine Schneidkante aufweisen, welche parallel zur Ebene (P) ist, die im wesentlichen senkrecht auf der Ebene des Sporns (1) steht.

4. Wurzelreisswerkzeug nach Anspruch 3, dadurch gekennzeichnet, dass die Zähne (11) der Absatz-Schneidkante (10) auf einer Fläche abgeschrägt sind, wobei die Schräge (25) nach unten gewendet ist.

5. Wurzelreisswerkzeug nach einem der Ansprüche 1 bis 4, dadurch gekennzeichnet, dass die Schneidklinge (5) einen Absatz aufweist, welcher einen vorspringenden Schneidwinkel (12) aufweist.

6. Wurzelreisswerkzeug nach einem der Ansprüche 1 bis 5, dadurch gekennzeichnet, dass die Schneidkante (2) des Sporns (1) gegenüber dem unteren Rand (13) des Sporns (1) um einen Winkel (d) geneigt ist, der kleiner als 90° ist.

7. Wurzelreisswerkzeug nach einem der Ansprüche 1 bis 6, dadurch gekennzeichnet, dass es Mittel (14) zum Anschliessen an einen angelenkten Arm (15) umfasst.

8. Wurzelreisswerkzeug nach Anspruch 7, dadurch gekennzeichnet, dass die Anschlussmittel (14) eine Halteplatte (16) umfassen, welche an der Rückseite des Sporns (1) und der Schneidklinge (5) befestigt ist.

9. Wurzelreisswerkzeug nach Anspruch 8, dadurch gekennzeichnet, dass die Halteplatte (16) an den Sporn (1) angelegt ist.

10. Wurzelreisswerkzeug nach Anspruch 8 oder Anspruch 9, dadurch gekennzeichnet, dass die Halteplatte (16) eine Verstärkungsplatte (22) umfasst, die längs des rückseitigen Randes der Halteplatte (16) senkrecht zu dieser angeordnet ist.

11. Wurzelreisswerkzeug nach einem der Ansprüche 7 bis 10, dadurch gekennzeichnet, dass die Schneidklinge (5) die Form eines Zylindersektors aufweist, welcher auf Mittel (19) zur Schwenkung des Werkzeugs gegenüber dem angelenkten Arm (15) zentriert ist.

12. Wurzelreisswerkzeug nach Anspruch 1, dadurch gekennzeichnet, dass es einen am Sporn (1) befestigten Handgriff (27) umfasst.

**Claims**

1. Tool for grubbing up the stumps of trees comprising, disposed at the end of a driving means, an elongate, flat spur (1) having a cutting edge (2) at one end and a cutting blade (5) in a transverse plane to the plane of the spur (1), the cutting blade (5) comprising a series of stepped teeth (6), each tooth (6) having a cutting edge (7) on a side adjacent to the cutting edge (2) of the spur (1), in which the cutting edge (7) of the teeth (6) of the series of stepped teeth (6) is parallel to a plane (P) substantially perpendicular to the plane of the spur (1), characterised in that each cutting edge (7) of the teeth (6) of the series of stepped teeth (6) is substantially perpendicular to the plane of the spur (1).

2. A tree stump removal tool according to claim 1, characterised in that the cutting blade has a heel which has a heel cutting edge (10) on a side of the cutting blade (5) remote from the cutting edge (2) of the spur (1).

3. A tree stump removal tool according to claim 2, characterised in that the heel cutting edge (10) comprises a series of stepped teeth (11) having a cutting edge parallel to the plane (P) substantially perpendicular to the plane of the spur (1).

4. A tree stump removal tool according to claim 3, characterised in that the teeth (11) of the heel cutting edge (10) are chamfered on one surface, the chamfer (25) facing downwardly.

5. A tree stump removal tool according to any one of claims 1 to 4, characterised in that the cutting blade (5) has a heel with a projecting cutting angle (12).

6. A tree stump removal tool according to any one of claims 1 to 5, characterised in that the cutting edge (2) of the spur (1) is inclined to the bottom edge (13) of the spur (1) by an angle (d) less than 90°.

7. A tree stump removal tool according to any one of claims 1 to 6, characterised in that it comprises means (14) for connection to a hinged arm (15).

8. A tree stump removal tool according to claim 7, characterised in that the connecting means (14) comprise a support plate (16) secured to the rear of the spur (1) and of the cutting blade (5).

9. A tree stump removal tool according to claim 8, characterised in that the support plate (16) is joined to the spur (1).

10. A tree stump removal tool according to claim 8 or 9, characterised in that the support plate (16) comprises a reinforcing plate (22) disposed along the rear edge of the support plate (16) perpendicularly to the latter.

11. A tree stump removal tool according to any one of claims 7 to 10, characterised in that the cutting blade (5) is in the form of a segment of a cylinder centred on means (19) for pivoting the tool with respect to the hinged arm (15).

12. A tree stump removal tool according to claim 1, characterised in that it comprises a handle (27) fixed to the spur (1).

FIG.1

FIG.2

FIG.3

FIG.4

FIG.5

FIG.6